# EUROPÄISCHE PATENTANMELDUNG

(11) **EP 4 575 041 A1**
(43) Veröffentlichungstag der Anmeldung: **25.06.2025**
(21) Anmeldenummer: 23219399.5
(22) Anmeldetag: 21.12.2023
(51) Int. Cl.: C25B 1/26, C25B 9/19, C25B 11/031, C25B 11/04

(54) **GASDIFFUSIONSELEKTRODE UND VERFAHREN ZUR VERMINDERUNG DER WASSERSTOFFENTWICKLUNG BEIM BETRIEB EINER ELEKTROLYSE MIT GASDIFFUSIONSELEKTRODE**

(71) Anmelder: Covestro Deutschland AG, 51373 Leverkusen (DE)
(72) Erfinder: Bulan, Andreas, 40764 Langenfeld (DE); Grossholz, Michael, 51375 Leverkusen (DE)
(74) Vertreter: Levpat

(57) **Zusammenfassung**

Zur Verbesserung der mechanischen Stabilität einer Gasdiffusionselektrode und der Verringerung der an der Gasdiffusionselektrode erzeugten Wasserstoffmenge während eines Elektrolysevorganges eignet sich eine Gasdiffusionselektrode, die mindestens einen Elektrokatalysator und mindestens eine, auf mehr als 75% der Fläche eines offenporigen, flächigen, aus mindestens einem Werkstoff gefertigten Trägers angeordnete Gasdiffusionsschicht 21 enthält und sich dadurch gekennzeichnet, dass bezogen auf das Gesamtgewicht des besagten Trägers der Gesamtanteil an elektrisch leitendem Werkstoff des besagten Trägers im Mengenbereich von 50 bis 100 Gew.-% liegt und der besagte Träger zumindest entlang eines seiner Randbereiche eine Teilfläche 22 aufweist, die nicht mit der Gasdiffusionsschicht bedeckt ist, wobei an besagter Teilfläche 22 zumindest an der Oberfläche des besagten Trägers ein Material vorliegt, das (a) elektrischen Strom leitet und bei 50°C mindestens die gleiche Überspannung für die Wasserstoffentwicklung aufweist als der mindestens eine Elektrokatalysator oder (b) ein Isolator ist.

## Beschreibung

Die Erfindung betrifft eine spezielle Gasdiffusionselektrode zur Verringerung der, insbesondere bei der Chloralkali Elektrolyse mit Einsatz von Sauerstoffverzehrkathoden auftretenden, Nebenreaktion der kathodischen Wasserstoffentwicklung. Zudem betrifft die Erfindung eine Elektrolysezelle, welche diese spezielle Gasdiffusionselektrode enthält, sowie ein Elektrolyseverfahren in dem diese Elektrolysezelle Anwendung findet.

Der Betrieb von Gasdiffusionselektroden erfordert in technischen Elektrolysevorrichtungen besondere Maßnahmen. So ist bei der technischen Nutzung zu beachten, dass die hierfür verwendete Gasdiffusionselektrode (im weiteren auch kurz GDE genannt) generell eine flächige, aber offenporige Struktur aufweist und als Trennung zwischen Elektrolytraum und Gasraum eingebaut wird. Die innere Struktur der GDE ermöglicht es generell, dass die Reaktion des Gases an einer Dreiphasengrenze zwischen dem Elektrolyt aus dem Elektrolytraum, dem Katalysator in der Gasdiffusionsschicht und dem Gas aus dem Gasraum möglichst nahe zum Elektrolyten hin erfolgt. Die Grenzschicht wird generell durch die Hydrophobie des Materials der Gasdiffusionsschicht stabilisiert. Es sind für den Betrieb einer verschiedene Konstruktionen geeigneter Elektrolysezellen bekannt, wie beispielsweise eine sogenannte Fallfilmzelle. Ebenfalls bekannt ist der Einsatz einer GDE in einer Elektrolysezelle mit Gastaschentechnologie wie sie in der Druckschrift EP 717 130 A1 beschrieben wird.

Bei der Fallfilmzelle wird, z.B. zur elektrochemischen Umsetzung von O₂, im technischen Maßstab wenigstens umfassend eine Kathodenhalbschale mit einer Kathode, mit einem Gasraum verbunden mit einer ersten Gaszuleitung für Gas, z.B. sauerstoffhaltiges Gas, und mit einer ersten Gasableitung (z.B. für die Ableitung von überschüssigem Sauerstoff, Wasserdampf und ggf. Wasserstoff) und mit einem Katholytzulauf und einem Katholytablauf weiter umfassend eine Anodenhalbschale mit einer Anode und einen zwischen Anodenhalbschale und Kathodenhalbschale angeordneten Separator zur Trennung von Anodenraum und Kathodenraum, wobei die Anodenhalbschale mindestens mit einer zweiten Gasableitung für das Anodenreaktionsprodukt, insbesondere Chlor, einem Anolytzulauf und einem Anolytablauf sowie einer Anode versehen ist, weiter umfassend elektrische Stromleitungen zur Verbindung der Anode und elektrische Stromleitungen zur Verbindung der Kathode mit einer Gleichspannungsquelle.

Die Kathode wird gebildet aus einer Gasdiffusionselektrode, z.B. zur Umsetzung von sauerstoffhaltigem Gas, die Anode und der Separator sind mit ihrer Hauptausdehnung vertikal angeordnet, und zwischen Separator und Kathode besteht ein Spalt zur Durchleitung des Katholyts nach dem Prinzip eines fallenden Flüssigkeitsfilms angeordnet ist.

Eine GDE zur kathodischen Umsetzung von sauerstoffhaltigem Gas wird auch als Sauerstoffverzehrkathode, im Folgenden als SVK abgekürzt, bezeichnet.

In EP 1 033 419 B1 wird die Herstellung einer SVK mit einem Trägerelement aus mit Silber beschichtetem geschäumtem Nickel beschrieben.

US 4,578,159 A1 nennt metallbeschichtete Fasern für die mögliche Nutzung in Trägerelementen für S auerstoffverzehrelektroden.

In US 2006/0175195 A1 wird die Herstellung von SVK mit diversen Kohlenstoff-basierenden Trägern beschrieben.

In der Druckschrift EP 2 444 526 A2 wird eine SVK beschrieben, die mindestens einen Träger in Form eines Flächengebildes sowie eine Beschichtung mit einer Gasdiffusionsschicht und einer katalytisch aktiven Komponente aufweist und sich dadurch kennzeichnet, dass der Träger auf einem Werkstoff mit einer Leitfähigkeit von < 1000 S/cm, bevorzugt von < 100 S/cm, gemessen bei 20 °C basiert. Als entsprechender Werkstoff für den Träger wurden Kunststoff-basierte Träger vorgeschlagen. Solche Träger können zur Erhöhung der Leitfähigkeit des Trägers bezogen auf dessen Gewicht maximal 10 Gew.-% elektrisch leitende Komponenten mit einer Leitfähigkeit > 1000 S/cm enthalten. Nachteilig an solchen Kunststoff-basierten Trägern ist die fehlende mechanische Stabilität unter den Einsatzbedingungen, wie z.B. bei Gegenwart einer O₂-haltigen Lauge mit Konzentration von ca. 30% und bei einer Betriebstemperatur von 80 bis 90°C. So darf der Kunststoff bei den Einsatzbedingungen und der mechanischer Belastung nicht weich werden und sich verformen.

Die Herstellung einer GDE mit leitfähigerem Träger, einem Netz aus Nickeldrähten, wird in der Druckschrift EP 1 728 896 A2 beschrieben. Hierin kommt ein elektrisch leitender Träger in Form von einem Netz, Vlies, Schaum, Gewebe, Geflecht, Streckmetall oder dergleichen zum Einsatz. Das Trägerelement besteht bevorzugt aus Metall, besonders bevorzugt aus Nickel, Silber oder versilbertem Nickel. Nachteilig am Einsatz eines solchen metallischen Trägers ist, insbesondere bei nickelbasiertem Träger, die leichte Neigung zur Entwicklung von Wasserstoff während der Elektrolyse.

Bei Betrieb einer SVK befindet sich betriebsgemäß der zur Reaktion notwendige Sauerstoff im Gasraum, der an der SVK zu Hydroxidionen umgesetzt werden soll. Die zuvor beschriebene mögliche Nebenreaktion der H₂-Entwicklung, die insbesondere mit zunehmender Degradation der SVK und damit verbunden steigender Zellspannung weiter zunimmt, ist unerwünscht. Zur Vermeidung von H₂-O₂ Knallgasgemischen speziell im Kathodenraum und auch den nachgeschalteten Anlagenteilen, kann zum sicheren Betrieb der Elektrolyse-Elemente eines Elektrolyseurs eine größere Menge O₂ zugeführt werden oder es muss die Stromdichte abgesenkt werden. Beide Maßnahmen sind wirtschaftlich nachteilig.

Bei höherer Zellspannung, darunter werden Zellspannungen von mehr als 1,8V verstanden, können an elektrolytbenetzten Bereichen der Elektrolysezelle, sowie insbesondere an elektrolytbenetzten Komponenten der GDE, wie dem Träger der GDE, die mit der Kathodenhalbschale elektrisch verbunden sind, Wasserstoff entwickelt werden. Dieser Wasserstoff kann sich im Element eines Elektrolyseurs akkumulieren oder z.B. das Recycling von Sauerstoff sicherheitstechnisch durch Bildung von Knallgas beeinträchtigen. Eine Wasserstoffentwicklung ist verfahrenstechnisch zu vermeiden.

Es wurde eine Möglichkeit gesucht, um auch mit degradierten GDEs bei hoher Spannung bzw. höheren Stromdichten die Elektrolyse, insbesondere die Chlor-Produktion, aufrecht zu erhalten.

Es bestand daher die Aufgabe einen Träger für eine GDE zu finden, der die oben genannten Nachteile nicht aufweist, und der insbesondere einen effizienten, sicheren sowie lang anhaltenden Betrieb einer GDE in einer Elektrolyse ermöglicht, ohne eine unerwünschte Wasserstoffentwicklung zu erhalten.

Diese Aufgabe wurde gelöst durch eine Gasdiffusionselektrode als ersten Gegenstand der Erfindung, enthaltend mindestens einen Elektrokatalysator und mindestens eine, auf mehr als 75% der Fläche eines offenporigen, flächigen, aus mindestens einem Werkstoff gefertigten Trägers angeordnete Gasdiffusionsschicht, dadurch gekennzeichnet, dass bezogen auf das Gesamtgewicht des besagten Trägers der Gesamtanteil an elektrisch leitendem Werkstoff des besagten Trägers im Mengenbereich von 50 bis 100 Gew.-%, insbesondere von 70 bis 100 Gew.-%, liegt und der besagte Träger zumindest entlang eines seiner Randbereiche eine Teilfläche aufweist, die nicht mit der Gasdiffusionsschicht bedeckt ist, wobei an besagter Teilfläche zumindest an der Oberfläche des besagten Trägers ein Material vorliegt, das (a) bei 25°C elektrischen Strom leitet und bei 50°C mindestens die gleiche Überspannung für die Wasserstoffentwicklung aufweist als der mindestens eine Elektrokatalysator oder (b) ein Isolator ist.

Die Gasdiffusionselektrode enthält mindestens einen Elektrokatalysator. Der Elektrokatalysator enthält bevorzugt mindestens einen Silber-haltigen Stoff, ausgewählt aus Silber, Silberoxid und Mischungen daraus.

Der Elektrokatalysator ist im Rahmen einer bevorzugten Ausführungsform der GDE in die Gasdiffusionsschicht der GDE eingearbeitet. Dies kann durch Mischung des Elektrokatalysators mit der Komponente der Gasdiffusionsschicht (beispielsweise PTFE) in Form eines Pulvers und anschließender Kompaktierung erzielt werden.

Eine beispielsweise zur O₂ Reduktion oder CO₂ Reduktion eingesetzte Gasdiffusionselektrode, enthält bevorzugt einen solchen Elektrokatalysator, der insbesondere hergestellt ist auf Basis von Silber und/oder Silberoxid, bevorzugt auf Basis von Silberpartikeln als Elektrokatalysator, der mit einem pulverförmigen Fluorpolymer, insbesondere PTFE Pulver, als nichtleitendes Bindemittel auf einem Träger kompaktiert aufgebracht ist.

Die Gasdiffusionselektrode enthält einen offenporigen, flächigen Träger. Als "offenporig" gelten gemäß allgemeinem Wissen des Fachmannes Materialien und daraus gefertigte Werkstücke, die offene Porenvolumina oder Löcher aufweisen, durch die hindurch ein Stofftransport ermöglicht wird, wie beispielsweise bei einem Schwamm (offenporiger Schaum), einem Geflecht oder einem Gitter. Die Träger weisen somit stoffdurchlässige Strukturen aus elektrisch leitfähigem Werkstoff auf.

Der offenporige, flächige Träger liegt bevorzugt als Gitter, Netz, Vlies, Schaum, Gewebe, Geflecht, Lochblech oder Streckmetall vor.

Wenn von der "Fläche des Trägers" die Rede ist, ist erfindungsgemäß die geometrische Fläche des Trägers gemeint, die sich aus den geometrischen Ausdehnungen des Trägers, wie z.B. Kantenlänge oder Höhe, berechnen lässt. Besagte "Teilfläche" ist ein wie oben definierter Teil der Fläche des Trägers.

Wenn von der "Oberfläche des (besagten) Trägers" die Rede ist, ist die tatsächliche Oberfläche des Materials des Trägerwerkstücks gemeint.

Entsprechend dem Stand der Technik haben die Träger in Gasdiffusionselektroden zwei wesentliche Funktionen: Sie dienen zum einen während und nach der Fertigung der Elektroden als mechanischer Träger für die Gasdiffusionsschicht und die den Elektrokatalysator enthaltende Schicht (wobei letztere beispielsweise auch die Gasdiffusionsschicht sein kann), und sorgen zum anderen meist für eine Stromverteilung.

Der Träger der erfindungsgemäßen GDE ist aus mindestens einem Werkstoff gefertigt. Dabei enthält der Träger der erfindungsgemäßen GDE, bezogen auf sein Gesamtgewicht einen Gesamtanteil an elektrisch leitendem Werkstoff des besagten Trägers im Mengenbereich von 50 bis 100 Gew.-%, bevorzugt von 70 bis 100 Gew.-%. Dabei kann der Träger einen oder mehrere elektrisch leitende Werkstoffe enthalten.

Es ist für den Träger erfindungsgemäß bevorzugt, wenn elektrisch leitender Werkstoff ausgewählt wird aus mindestens einem Werkstoff, der bei 25°C eine elektrische Leitfähigkeit von mehr als 10000 S/cm, bevorzugt von mindestens 1 MS/cm (Megasiemens/cm), besonders bevorzugt von mindestens 5 MS/cm, aufweist. Es ist erfindungsgemäß besonders bevorzugt, wenn besagter mindestens eine Werkstoff des Trägers ein metallischer Werkstoff ist, der ganz besonders bevorzugt mindestens 99 Gew.-% mindestens eines Metalls ausgewählt aus Nickel, Silber, Nickellegierung oder Mischungen daraus, enthält.

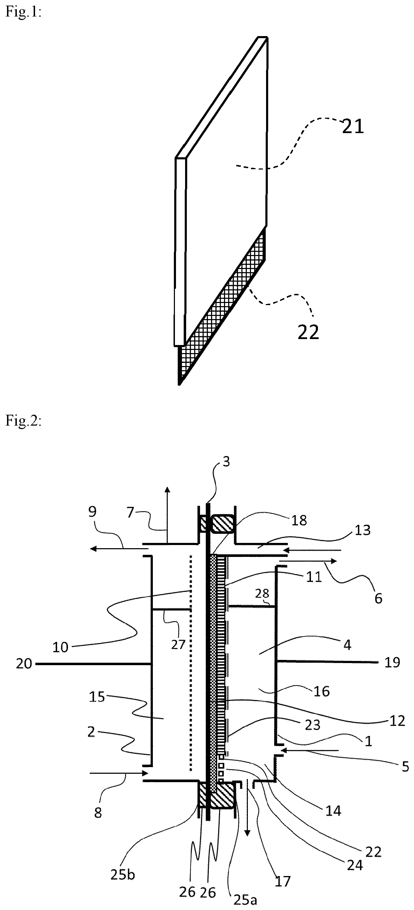

Auf dem Träger der erfindungsgemäßen GDE ist auf mehr als 75% der Fläche des Trägers eine Gasdiffusionsschicht angeordnet. Diese Gasdiffusionsschicht ist ebenso flächig und offenporig. Zumindest entlang eines Randbereiches des Trägers ist ein Anteil der Fläche des Trägers als Teilfläche nicht mit der Gasdiffusionsschicht bedeckt. Diese Konfiguration ist beispielhaft in Fig. 1 abgebildet, wobei die nicht mit der Gasdiffusionsschicht bedeckte Teilfläche des Trägers entlang eines Randbereiches durch die schraffierte Teilfläche **22** veranschaulicht ist. Diese Teilfläche weist zumindest an der Oberfläche des besagten Trägers ein Material auf, das (a) bei 25°C elektrischen Strom leitet und bei 50°C mindestens die gleiche Überspannung für die Wasserstoffentwicklung aufweist als der mindestens eine Elektrokatalysator oder das (b) ein Isolator ist. In Fig. 1 ist der Rest der Fläche des Trägers mit einer Gasdiffusionsschicht **21** flächig bedeckt.

Die Teilfläche des Trägers, die entlang eines Randbereiches nicht mit der Gasdiffusionsschicht bedeckt ist weist zumindest an der Oberfläche des besagten Trägers ein Material auf, das (a) bei 25°C elektrischen Strom leitet und bei 50°C mindestens die gleiche Überspannung für die Wasserstoffentwicklung aufweist als der mindestens eine Elektrokatalysator oder (b) ein Isolator ist. Das besagte Material kann zumindest an der besagten Teilfläche des Trägers beispielsweise durch Galvanisieren, Aufsprühen, Bestreichen oder Eintauchen auf die Oberfläche des Trägers, insbesondere die Oberfläche des besagten elektrisch leitenden Werkstoffs, aufgebracht werden. Weiterhin ist beispielsweise möglich, dass der Träger zu 100% aus einem Material besteht, das bei 25°C elektrischen Strom leitet und bei 50°C mindestens die gleiche Überspannung für die Wasserstoffentwicklung aufweist als der mindestens eine Elektrokatalysator.

Im Rahmen einer bevorzugten Ausführungsform der Gasdiffusionselektrode weist der Träger an besagter Teilfläche, die entlang eines Randbereiches nicht mit der Gasdiffusionsschicht bedeckt ist, eine Oberflächenbeschichtung mit besagtem Material auf. Eine besonders bevorzugte Ausführungsform der Gasdiffusionselektrode ist wiederum dadurch gekennzeichnet, dass an besagter Teilfläche des Trägers eine Oberflächenbeschichtung des besagten elektrisch leitenden Werkstoffs mit besagtem Material vorliegt.

Das Material, das sich zumindest an der Oberfläche des Trägers entlang des Randbereiches ohne Gasdiffusionsschicht befindet, hat bevorzugt Leitfähigkeiten, die deutlich kleiner sind als die von Metallen (Leitfähigkeit Silber: 62 MS/cm (MegaSiemens/cm), Leitfähigkeit Nickel: 14,5 MS/cm). Das besagte Material wird bevorzugt aus solchen Materialien ausgewählt, die bei 25°C eine elektrische Leitfähigkeit von 0 bis 10000 S/cm, bevorzugt von 0 bis 5000 S/cm, besonders bevorzugt von 0 bis 1000 S/cm , aufweisen.

Leitet das besagte Material bei 25°C elektrischen Strom, dann ist es erfindungsgemäß, wenn dieses Material mindestens die gleiche Überspannung für die Wasserstoffentwicklung aufweist, als der mindestens eine Elektrokatalysator. Die Überspannung eines besagten Materials für die Wasserstoffentwicklung wird bei 50°C nach folgendem Messprotokoll bestimmt:
Als Referenz für die Überspannung wird das Potential für die Wasserstoffentwicklung gemessen gegenüber einer Referenzelektrode benutzt. Je höher das gemessene Potenzial ist, desto höher die Überspannung. Als Referenzelektrode wird eine RHE eingesetzt (Reverse Hydrogen Electrode, beispielsweise Type HydroFlex der Fa. Gaskatel). Die Messung erfolgt beispielsweise in einer Halbzelle der Fa. Gaskatel, Typ Messzelle FlexCell. Als Elektrolyt wird eine 32 Gew.%ige Natronlauge eingesetzt und bei einer Temperatur von 50°C gemessen.

Es ist erfindungsgemäß besonders bevorzugt, wenn das besagte Material bei 25°C elektrischen Strom leitet und ausgewählt wird aus dem mindestens einen Elektrokatalysator, bevorzugt ausgewählt wird aus Silber, Silberoxid und Mischungen daraus.

Es ist erfindungsgemäß weiter besonders bevorzugt, wenn es sich bei dem besagten Material um klassische Isolatoren (Leitfähigkeit < 10⁻⁸ S/cm) handelt. Bevorzugte Gasdiffusionselektroden sind somit dadurch gekennzeichnet, dass das besagte Material als Isolator bei 25°C eine Leitfähigkeit von weniger als 10⁻⁸ S/cm aufweist.

Solches Material wird als Isolator besonders bevorzugt ausgewählt aus Polymer, Mineralfasern und Mischungen daraus. Besonders bevorzugt wird das Material als Isolator aus mindestens einem kohlenstoffhaltigen Polymer ausgewählt. Als Material besonders geeignetes Polymer wird ganz besonders bevorzugt ausgewählt aus mindestens einem Polymer ausgewählt aus Polyethylen, Polypropylen, chloriertem Polyolefin, Polyvinylchlorid, Polymeren fluorierter Olefine wie Polytetrafluorethylen, Polyvinlyfluorid, Polyvinylidenfluorid, PFA (Perfluoralkoxy-Polymer), FEP Fluorethylenpropylen-Polymer, E-CTFE (Ethylen Chlor-trifluorethylen Copolymer), Melamin, Polyacrylnitril, Polyamid 6, Polyamid 6,6, Polyamid 11, Polyamid 12, Aromatische Polyamide wie Kevlar^{®}, Polycarbonat, Polystyrol und Copolymere wie ABS, SAN, ASA, Polyphenylenoxid, Polyurethan, Polyethylenterephthalat, Polybutylenterephthalat, Polyetheretherketon, Polysulfon, Polyimid, Polyetherimid, Polyamidimid, Polyarylat, Polyphenylensulfid, Polyvinylacetat, Ethylen-Vinylacetat, Polyvinylidenchlorid, PMMA, Polybutylene, Celluloseacetat, Polylactide und Copolymere und Blends der genannten Polymere. Bevorzugt werden Polypropylen, Polymere fluorierter Olefine, insbesondere Polytetrafluorethylen, Polyvinylfluorid, Polyphenylensulfid, besonders bevorzugt Polytetrafluorethylen, als Material eingesetzt.

Weiter bevorzugte Gasdiffusionselektroden kennzeichnen sich dadurch, dass das Material als Isolator ausgewählt wird aus mindestens einem Polymer, ausgewählt aus Polyethylen, Polypropylen, Polymere fluorierter Olefine (wie Polytetrafluoroethylen, Polyvinylfluoride, Polyvinylidenfluorid), Polyamid-6, Polyamid-6,6, Polyamid-11, Polyamid-12, Polyethylen-Copolymer, Polypropylen-Copolymer, Copolymere aus fluorierten Olefinen, Polyamid-Copolymer.

Die erfindungsgemäße Gasdiffusionselektrode enthält neben dem Elektrokatalysator und dem Träger zusätzlich mindestens eine Gasdiffusionsschicht. Eine bevorzugte Ausführungsform der Gasdiffusionselektrode kennzeichnet sich dadurch, dass die Gasdiffusionsschicht mindestens ein hydrophobes Polymer, insbesondere mindestens ein perfluoriertes Polymer, besonders bevorzugt mindestens ein Polymer fluorierter Olefine (wie Polytetrafluoroethylen, Polyvinylfluoride, Polyvinylidenfluorid), ganz besonders bevorzugt PTFE, enthält.

Gasdiffusionsschicht und Elektrokatalysator werden durch den Träger stabilisiert. Zu diesem Zweck sollten die geträgerten Komponenten mit dem Träger hinreichend stabil verbunden werden. Dies kann beispielsweise durch Kompaktierung einer Pulvermischung auf dem Träger geschehen. Möglich sind auch Verfahren, bei welchen ein Gemisch aus Katalysator und Gasdiffusionsschichtkomponente (z.B. hydrophobes Polymer) in einem ersten Schritt zu einem flächigen Gebilde ("Fell") verdichtet wird und dieses Gebilde dann in das Trägerelement gepresst wird. Beispiele für solche Verfahren sind in DE 10148599 A1 oder EP 0 115 845B1 beschrieben. Da diese flächigen Gebilde eine geringe mechanische Stabilität aufweisen, haben sich diese Verfahren als wenig praxistauglich erwiesen. Es werden daher diejenigen Verfahren bevorzugt, bei welchen erst die Beschichtung des Trägerelement mit dem Gemisch aus Katalysator und Gasdiffusionsschicht-komponente (z.B. hydrophobes Polymer) erfolgt und in weiteren Schritten die Verdichtung und/oder Verfestigung erfolgen.

Als GDE wird, insbesondere für die Reduktion von O₂ zu Hydroxidionen, besonders bevorzugt eine silberbasierte GDE eingesetzt. Insbesondere bevorzugt wird eine silberbasierte GDE eingesetzt, die gefertigt ist gemäß den Maßgaben, die in der Offenlegungsschrift EP 1 728 896 A2 grundsätzlich offenbart sind, besonders bevorzugt gemäß den darin beschriebenen Beispielen. Die Porosität der katalytisch aktiven Schicht, berechnet aus den Mengen und den Materialdichten der eingesetzten Rohstoffe im Verhältnis zum Volumen der Elektrode berechnet aus den geometrischen Ausmaßen von Fläche und Dicke, abzüglich des Trägervolumens, soll aber besonders bevorzugt mehr als 10%, jedoch insbesondere weniger als 80% betragen.

Beispielhaft lässt sich die erfindungsgemäße GDE wie folgt herstellen:
3,5 kg einer Pulvermischung, bestehend aus 5 Gew.% PTFE-Pulver, 88 Gew.% Silber-I-Oxid und 7 Gew.% Silberpulver (z.B. Typ 331 der Fa. Ferro), wird in einem Mischer der Fa. Eirich, Typ R02, ausgerüstet mit einem Sternwirbler als Mischelement, bei einer Drehzahl von 6000 U/min so gemischt, dass die Temperatur der Pulvermischung 55 °C nicht übersteigt. Insgesamt wird das Mischen dreimal bei einer Mischzeit von 50 Sekunden und dreimal bei einer Mischzeit von 60 Sekunden durchgeführt. Nach dem Mischen wird die Pulvermischung mit einem Sieb mit einer Maschenweite von 1,0 mm gesiebt. Die gesiebte Pulvermischung wird anschließend auf den Träger aufgebracht. Das Trägerelement basiert auf einem ein Drahtnetz aus Nickel als Werkstoff mit einer Drahtdicke von 0,14 mm und einer Maschenweite von 0,5 mm. Das Aufbringen erfolgt mit Hilfe einer 2 mm dicken Schablone, wobei das Pulver mit einem Sieb mit einer Maschenweite von 1,0 mm auf eine Fläche von 75% der Fläche des Tägers aufgebracht wird. Überschüssiges Pulver, das über die Dicke der Schablone hinausragte, wird mittels eines Abstreifers entfernt. Nach Entfernung der Schablone wird der Träger mit der aufgebrachten Pulvermischung mittels einer Walzenpresse mit einer Presskraft von 0,45 kN/cm verpresst. Der Walzenpresse wird die Gasdiffusionselektrode entnommen. Die Gasdiffusionselektrode hat eine Porosität von etwa 50 %.

Die Teilfläche des Trägers, die nicht mit der Gasdiffusionsschicht versehen ist oder (falls die Gasdiffusionsschicht noch nicht aufgebracht ist) versehen werden soll, wird beispielsweise vollständig mit einer handelsüblichen Dispersion von PTFE besprüht, getrocknet und anschließend gesintert, wodurch eine Oberflächenbeschichtung des Nickeldrahtes (Werkstoff: Nickel) mit PTFE unter Beibehaltung der Netzstruktur erhalten wird.

Es ist ebenso beispielsweise denkbar, nach oben beschriebenen Verfahren eine GDE mit einem Träger aus dem Elektrokatalysator als elektrisch leitenden Werkstoff, z.B. Silber, herzustellen oder einen Träger aus Nickel als elektrisch leitenden Werkstoff durch Galvanisierung mit einer Silberschicht an besagter Oberfläche der Teilfläche zu versehen.

Es hat sich gezeigt, dass sich die erfindungsgemäße GDE besonders für den Einsatz in einer als Fallfilmzelle konstruierten Elektrolysezelle eignet. Hier ist konstruktionsbedingt insbesondere die mechanische Krafteinwirkung auf den Träger der GDE vergleichsweise groß und die Herausführung des Elektrolyten aus dem Katholytspalt hinaus auf die rückwärtige Seite der GDE durch einen stoffdurchlässigen Bereich der GDE (i.e. der Teilbereich der besagten GDE ohne Gasdiffusionsschicht) hindurch in den Katholytablauf bedingt einen vergleichsweise intensiven Kontakt des Trägers der GDE mit dem Elektrolyten.

Ein zweiter Gegenstand der Erfindung ist daher eine Elektrolysezelle, enthaltend
(i) eine Anodenhalbschale (2) mit einem Anodenraum (15);
(ii) eine aus elektrisch leitfähigem Werkstoff gefertigte Kathodenhalbschale (1) mit einem Kathodenraum (16), enthaltend mindestens einen Katholytraum, der mindestens einen Katholytzulauf (13), mindestens einen Katholytspalt (12), mindestens einen Katholytablauf (14) und mindestens einen Abfluss (17) enthält;
(iii) mindestens einen Separator (3) zur Abgrenzung des Anodenraums (15) der Anodenhalbschale (2) vom Kathodenraum (16) der Kathodenhalbschale (1);
(iv) eine Gasdiffusionselektrode (11) gemäß erstem Gegenstand der Erfindung, wobei die Gasdiffusionselektrode (11) mit ihrer größten Fläche auf Abstand entlang der Separatorfläche unter Bildung eines Katholytspaltes (12) orientiert ist und den Kathodenraum (16) in einen Gasraum (4) und den Katholytraum unterteilt und wobei die Teilfläche (22) des offenporigen Trägers der Gasdiffusionselektrode, die nicht mit der Gasdiffusionsschicht bedeckt ist, den Katholytspalt (12) von dem Katholytablauf (14) abgrenzt;

wobei zwischen Katholytspalt (12) und Gasraum (4) mindestens ein Bereich (24) mit einer stofflichen Durchlässigkeit vorhanden ist, der einen Übertritt von Katholyt aus dem Katholytspalt (12) in den Katholytablauf (14) ermöglicht, wobei mindestens ein Areal der Teilfläche (22) des
offenporigen Trägers der Gasdiffusionselektrode derart im Bereich (24) mit stofflicher Durchlässigkeit positioniert ist, dass es mit Katholyt in Kontakt treten kann.

Bevorzugt eignen sich ebenso die entsprechend vorgenannten Ausführungsformen der GDE des ersten Erfindungsgegenstandes (*vide supra*)*.*

Die Elektrolysezelle weist eine Anodenhalbschale mit Anodentraum auf. Die Ausgestaltung des Anodenraumes für den Betrieb einer Elektrolyse ist dem Fachmann hinreichend aus dem Stand der Technik bekannt. Als Anolyt wird für den Betrieb der Elektrolysezelle beispielsweise im Rahmen der Chloralkalielektrolyse eine hochkonzentrierte wässrige Alkalichlorid Lösung zugeführt. Die Konzentration im Zulauf des Anodenraums beträgt für NaCl 250-310 g/L. Die Konzentration im Auslauf des Anodenraums 180 - 230 g/L.

Die Elektrolysezelle weist ferner eine aus elektrisch leitfähigem Werkstoff gefertigte Kathodenhalbschale mit einem Kathodentraum auf. Es hat sich als erfindungsgemäß bevorzugt erwiesen, wenn besagter elektrisch leitfähige Werkstoff ausgewählt wird aus metallischem Werkstoff, insbesondere einem Metall oder einer Metalllegierung. Besonders bevorzugt weist besagter elektrisch leitfähige Werkstoff bei 25°C eine elektrische Leitfähigkeit von mehr als 10000 S/cm, bevorzugt von mindestens 1 MS/cm (Megasiemens/cm), bevorzugt von mindestens 5 MS/cm, auf.

Es ist erfindungsgemäß ganz besonders bevorzugt, wenn besagter elektrisch leitfähige Werkstoff der Kathodenhalbschale ein metallischer Werkstoff ist, der mindestens 99 Gew.-% mindestens eines Metalls ausgewählt aus Nickel, Silber, Nickellegierung oder Mischungen daraus, enthält. Als weiter bevorzugter elektrisch leitfähiger Werkstoff mit Beständigkeit und mechanischer Stabilität haben sich Nickel sowie Nickellegierungen zur Konstruktion der Kathodenhalbschale erwiesen.

Ist die Kathodenhalbschale der GDE derart mit der Stromversorgung verbunden, dass sie im Elektrolysebetrieb stromführend ist und ist sie zu diesem Zweck aus einem Stoff gefertigt, der elektrischen Strom leitet und bei 50°C eine niedrigere Überspannung für die Wasserstoffentwicklung aufweist als der mindestens eine Elektrokatalysator der GDE (z.B. aus Nickel oder einer Nickellegierung), hat es sich in einer besonders bevorzugten Ausführungsform der Elektrolysezelle als vorteilhaft erwiesen, wenn zumindest an den Teilbereichen der Oberfläche dieser Kathodenhalbschale, die im Betrieb mit dem Elektrolyten in Kontakt stehen, ein Material vorliegt, das (a) elektrischen Strom leitet und bei 50°C mindestens die gleiche Überspannung für die Wasserstoffentwicklung aufweist als der mindestens eine Elektrokatalysator der GDE oder (b) ein Isolator ist. Dieses Material wird bevorzugt aus mindestens einem derjenigen Materialien ausgewählt, wie sie für die Oberfläche des nicht mit der Gasdiffusionsschicht belegten Teilfläche des Trägers der GDE beschrieben wurden (*vide supra*)*.* Dies sind beispielsweise fluorierte Polymere, wie PTFE, PFA (Perfluoralkoxy-Polymer), FEP Fluorethylenpropylen-Polymer, oder E-CTFE (Ethylen Chlor-trifluorethylen) oder Polyethylen oder Polypropylen.

Die besagten Teilbereiche der Oberfläche der Kathodenhalbschale können mit diesem Material beispielsweise durch Galvanisieren, Aufsprühen, Bestreichen oder Eintauchen auf den besagten Teilbereich der Oberfläche der Kathodenhalbschale aufgebracht werden.

Bei der erfindungsgemäßen Elektrolysezelle befinden sich entsprechende Teilbereiche in dem unteren Bereich der gesamten Kathodenhalbschale, in welchem bei Betrieb Elektrolyt vorhanden ist, insbesondere im Bereich mit stofflicher Durchlässigkeit der Kathodenhalbschale, in dem die besagte Teilfläche des offenporigen Trägers der GDE des ersten Gegenstandes der Erfindung positioniert ist.

Durch die zusätzliche Ausrüstung der besagten Teilbereiche der Oberfläche der Kathodenhalbschale konnte die während der Elektrolyse stattfindende H₂-Entwicklung zusätzlich reduziert werden.

Der Kathodenraum der erfindungsgemäßen Elektrolysezelle enthält mindestens einen Katholytraum, der mindestens einen Katholytzulauf, mindestens einen Katholytspalt, mindestens einen Katholytablauf und mindestens einen Abfluss enthält. Der Katholytspalt befindet sich im Kathodenraum zwischen dem mindestens einen Separator und der GDE und wird gebildet, in dem die GDE mit ihrer größten Fläche auf Abstand entlang der Separatorfläche unter Bildung des Katholytspaltes orientiert ist. Auf der vom Separator abgewandten Seite der besagten Fläche der GDE befindet sich der Gasraum.

Der Separator fungiert als Abgrenzung des Anodenraums der Anodenhalbschale vom Kathodenraum der Kathodenhalbschale. Der Separator ist bevorzugt als Ionenaustauschermembran oder als Diaphragma ausgeführt, besonders bevorzugt ist der Separator eine Ionenaustauschermembran.

Als lonenaustauschermembran sind insbesondere Membranen geeignet, die als Kationenaustauschermembranen ausgeführt sind und Kationen vom Anodenraum in den Kathodenraum leiten können. Diese sind aus dem Stand der Technik grundsätzlich bekannt. Der Ionentransport ist bei üblichen Ionenaustauschermembranen auch mit einem Wassertransport verbunden, der von den gewählten Konzentrationen des Anolyt und Katholyts, Temperatur und Betriebsbedingungen abhängt.

In einer weiteren bevorzugten Ausführungsform der Elektrolysezelle ist im Katholytspalt zwischen Separator und GDE ein Mittel zur Strömungsbremsung des Katholytstroms vorgesehen, nachfolgend Strömungsbremse genannt. Hiermit kann die Verweilzeit des Katholyts im Katholytspalt gesteuert werden. Die Strömungsbremse ist besonders bevorzugt als bei 25°C elektrisch nicht leitendes, inertes textiles Flächengebilde (als Isolator), ausgebildet. Die Strömungsbremse kann insbesondere aus einem porösen textilen Flächengebilde, insbesondere bevorzugt einem Gewebe, Gestrick oder Gewirk, bestehen, das im Katholytspalt angeordnet wird. Denkbar sind als Alternative auch mechanische Einbauten im Katholytspalt, die eine horizontale oder zur Horizontalen leicht angewinkelte Elektrolytführung ermöglichen, sodass ein mäandrierender Fluss des Elektrolyts resultiert. Der Werkstoff, aus dem die Strömungsbremse besteht, kann grundsätzlich hydrophil sein, wie z.B. die aus dem Beispiel 1 der WO 2003/042430 A2 bekannte Strömungsbremse, oder hydrophob je nach Wahl der Strömungsverhältnisse oder der Viskosität des Katholyts.

Um zu gewährleisten, dass der Katholytspalt immer ausreichend mit Katholyt versorgt wird, kann die Zuführung des Katholyts bevorzugt über einen Verteilerkanal erfolgen, der die Katholyt-Zuleitung mit dem Spalt verbindet. Zur Sicherstellung, dass der Verteilerkanal immer mit Elektrolyt gefüllt ist, kann dieser einen Überlauf (in Fig. 2 nicht gezeichnet) aufweisen, über den ggf. überschüssig zugeführter Elektrolyt abgeführt werden kann. Die GDE dichtet hierbei insbesondere den Verteilerkanal und den Spalt vom Gasraum gasdicht ab.

Als Katholyt wird häufig eine wässrige Lösung mit einem pH-Wert bei 25°C von mindestens pH 8 eingesetzt. Bevorzugt enthält der Katholyt Alkalihydroxid, wie Natriumhydroxid oder Kaliumhydroxid. Vorzugsweise wird dabei eine Konzentration gewählt, die eine möglichst hohe Leitfähigkeit aufweist. Im Falle der wässerigen Lösungen von Natriumhydroxid ganz besonders bevorzugt eine Natriumhydroxid Konzentration von 28 - 33 Gew.%, bezogen auf das Gesamtgewicht des Katholyten.

Zur Einstellung der vorgegebenen Zulauftemperaturen der Elektrolyte zum Anodenraum bzw. Kathodenraum können die Elektrolyte bedarfsweise mittels Wärmetauschern aufgeheizt oder auch gekühlt werden. Zur ggf. Einstellung der Konzentration des Elektrolyten können entsprechende Mengen an Elektrolytsalz oder Wasser zugegeben werden.

Der Fachmann kennt diverse Ausführungsformen zur Stromversorgung von Gasdiffusionselektroden. Die Kontaktierung der GDE mit einer Stromzuleitung im Kathodenraum erfolgt bevorzugt zweckmäßigerweise über eine elastisch gelagerte elektrisch leitende Struktur. Diese kann so ausgeführt werden, das eine steife Struktur z.B. in Form eines Streckmetalls auf Federn gelagert die GDE von der Seite des Gasraumes her elektrisch kontaktiert. Zur Aufrechterhaltung der Abmessungen des Katholytspaltes zwischen GDE und Separator bei einer Druckbelastung z. B. durch die elektrische Kontaktierung werden insbesondere Abstandshalter in den Spalt zwischen Separator und GDE eingebaut. Die Funktion des Abstandshalters kann auch die Strömungsbremse übernehmen, wenn diese über eine ausreichende mechanische Stabilität und Steifigkeit bei Druckbelastung auf ihrer Fläche verfügt.

Ein weiterer Gegenstand der Erfindung ist ein Verfahren zur elektrochemischen Umwandlung gasförmiger Verbindungen, das sich dadurch gekennzeichnet, dass in einer Elektrolysezelle des zweiten Gegenstandes der Erfindung eine gasförmige Verbindung durch eine erste Gaszuleitung (5) in den Gasraum (4) der Kathodenhalbschale (1) eingebracht wird, mit der Gasdiffusionselektrode (11) kontaktiert wird und durch das Anliegen einer elektrischen Spannung elektrochemisch umgesetzt wird.

Es ist erfindungsgemäß bevorzugt im Rahmen einer weiteren Ausführungsform in dem Verfahren eine gasförmige Verbindung, ausgewählt aus Sauerstoffgas oder CO₂ durch eine erste Gaszuleitung in den Gasraum der Kathodenhalbschale einzubringen.

Dabei ist es im Rahmen einer bevorzugten Ausführungsform des Verfahrens vorteilhaft, wenn Katholyt durch den Katholytzulauf (13) in die Elektrolysezelle eingebracht wird, durch den Katholytspalt (12) hindurchgeführt wird, durch den Bereich (24) mit stofflicher Durchlässigkeit in den Katholytablauf (14) überführt und mit einem Areal der Fläche (22) des offenporigen Trägers der Gasdiffusionselektrode kontaktiert wird und aus dem Abfluss (18) wieder herausgeführt wird.

Als Katholyt wird in dem Verfahren im Rahmen einer weiteren bevorzugten Ausführungsform eine wässrige Lösung eines Alkalimetallhydroxids eingesetzt, insbesondere NaOH. Vorzugsweise wird dabei eine Einsatzkonzentration gewählt, die eine möglichst hohe Leitfähigkeit aufweist, was beispielsweise im Falle von wässerigen Lösungen von Natriumhydroxid (NaOH) eine besonders bevorzugte Konzentration von 28 - 33 Gew.%, bezogen auf das Gesamtgewicht des Katholyts ergibt.

Die Elektrolyse nach dem erfindungsgemäßen Verfahren findet im Rahmen einer weiteren bevorzugten Ausführungsform bei einem Überdruck des Elektrolyten von 160 - 240 mbarü, bevorzugt 180 mbarü auf der Anodenseite, und weiter bevorzugt bei einem Überdruck von 160 - 240 mbarü, besonders bevorzugt 220 mbarü, auf der Kathodenseite statt.

Die Temperatur des herausgeführten Katholyten beträgt bevorzugt 80 - 90 °C, besonders bevorzugt 85-89 °C.

Die Temperatur des aus der Anodenhalbschale herausgeführten Anolyten beträgt bevorzugt mehr als 60°C. Diese Temperatur hängt korreliert bevorzugt mit der Stromdichte, so beträgt beispielsweise die Temperatur des herausgeführten Anolyten 65 °C bei einer Stromdichte von 6 kA/m².

Die anliegende Elektrolysespannung beträgt beispielsweise 2,25 V bei einer Stromdichte von 6 kA/m². Durch Alterungseffekte, hervorgerufen z.B. durch geringste Mengen an Verunreinigungen steigt die Elektrolysespannung im Laufe der Zeit über 2,35 V und höher an.

Die nachfolgenden Beispiele beziehen sich auf den Betrieb einer Chloralkali SVK Elektrolyse, wobei die Lösung zur Vermeidung der Wasserstoffentwicklung auf andere Elektrolysen mit Gasdiffusionselektrode angewandt werden können. Insbesondere bei der elektrochemischen CO₂ Reduktion zu CO, zu Methanol oder anderen C-haltigen Verbindungen, ist das Potential der Kathode unter Betriebsbedingen unterhalb der der Wasserstoffentwicklung, so dass auch hier die erfindungsgemäße Elektrolysezelle, die erfindungsgemäße GDE und das erfindungsgemäße Verfahren eine Verbesserung mit Blick auf die gelöste Aufgabe .

Die Erfindung wird nachstehend anhand der Figuren 1 und 2 beispielhaft näher erläutert. In den Figuren haben die folgenden Bezugszeichen die jeweils rechtsstehende Bedeutung:
1 Kathodenhalbschale
2 Anodenhalbschale
3 Separator (Diaphragma, Ionenaustauschermembran)
4 Gasraum (Kathode)
5 erste Gaszuleitung für Reaktand der GDE (eg. für O₂ oder CO₂) (Kathodenraum)
6 erste Gasableitung für gasförmige Reaktionsprodukte und überschüssigem Reaktanden (Kathodenraum)
7 zweite Gasableitung für das Anodenreaktionsprodukt (Anodenraum)
8 Anolytzulauf
9 Anolytablauf
10 Anode
11 Gasdiffusionselektrode, mit geträgerter Gasdiffusionsschicht mit
   Elektrokatalysator (schraffierte Fläche) und der Teilfläche 22 des Trägers (Quadratsymbole) ohne Gasdiffusionsschicht aber mit erfindungsgemäßer Oberflächenbeschaffenheit des Trägers (Kathode)
12 Katholytspalt als Raum zwischen Gasdiffusionselektrode 11 und
   Separator 3, hier gefüllt mit Strömungsbremse 18
13 Katholytzulauf als Raum zur Einleitung von Katholyt und zur Zuführung von Katholyt zum Katholytspalt 12
14 Katholytablauf als Raum zur Ableitung von Katholyt aus dem Katholytspalt 12 bis zur Herausführung über den Abfluss 17
15 Anodenraum
16 Kathodenraum, umfassend Gasraum 4, Katholytspalt 12, Katholytablauf 14,
17 Abfluss von Katholyt aus der Kathodenhalbschale 1
18 Strömungsbremse, verlaufend durch den Katholytspalt 12
19 Stromleitung Kathode
20 Stromleitung Anode
21 auf erfindungsgemäßem Träger geträgerte Gasdiffusionsschicht,
   enthaltend Elektrokatalysator
22 Teilfläche des Trägers ohne Gasdiffusionsschicht und mit erfindungsgemäßer Oberflächenbeschaffenheit
23 Steife, elektrisch leitfähige Struktur mit Durchbrüchen (für Gas / Elektrolyt)
24 Bereich mit stofflicher Durchlässigkeit von Katholyt aus dem Katholytspalt 12 in den Katholytablauf 14, damit Katholyt aus dem Katholytspalt 12 zum
   Abfluss 17 fließen kann
25a Flanschbereich Kathodenhalbschale
25b Flanschbereich Anodenhalbschale
26 Dichtung

In Fig. 1 wird ein Beispiel einer erfindungsgemäßen GDE illustriert. Diese exemplarische GDE der Fig. 1 weist eine Silber als Elektrokatalysator enthaltende Gasdiffusionsschicht **21** auf, die PTFE als Polymer enthält und auf einem offenporigen, flächigen Träger geträgert ist. Der Träger enthält bezogen auf sein Gesamtgewicht mindestens 99 Gew.-% Silber als den elektrischen Strom leitendes Material. An der Teilfläche **22** des Trägers ohne Beschichtung mit Gasdiffusionsschicht liegt ebenfalls an der Oberfläche des Trägers Silber vor.

In Fig. 2 wird eine Elektrolysezelle nach dem Prinzip des fallenden Films illustriert, in der zwischen Anodenhalbschale **2** und Kathodenhalbschale **1** eine lonenaustauschermembran als Separator **3** positioniert ist, die den Anodenraum **15** vom Kathodenraum **16** trennt. Der Kathodenraum umfasst den Gasraum **4,** einen Katholytspalt **12** und den Katholytablauf **14.** Im Betrieb wird in den Gasraum **4** über die erste Gaszuleitung **5** insbesondere der gasförmige Reaktand der GDE (eg. O₂ oder CO₂) eingeleitet und die gasförmigen Reaktionsprodukte über eine erste Gasableitung **6** für gasförmige Reaktionsprodukte und überschüssigem Reaktanden abgeleitet. Der Gasraum **4** ist derart konzipiert, dass der über die Gaszuleitung **5** eingebrachte Reaktand mit der der Separator **3** abgewandten und dem Gasraum **4** zugewandten Fläche der GDE **11** in Kontakt treten kann und die nach Kontaktierung der GDE **11** gebildeten Reaktionsprodukte aus der Gasableitung **6** abgeführt werden können.

Der Katholytspalt **12** wird als Raum zwischen dem Separator **3** und der dem Separator **3** zugewandten Fläche der GDE **11** definiert. In dem Katholytspalt **12** befindet sich die Strömungsbremse **18,** die die Strömung des durch den Katholytzulauf **13** eigebrachten Katholyts reguliert. Der Katholytzulauf **13** definiert den Raum zur Einleitung von Katholyt und zur Zuführung von Katholyt zum Katholytspalt **12.** Der Separator **3** kontaktiert flächig die Strömungsbremse **18,** welche wiederum flächig die GDE **11** kontaktiert. Der Katholyt wird aus dem Abfluss von Katholyt **17** aus der Kathodenhalbschale **1** herausgeführt.

Die Gasdiffusionselektrode **11** weist eine geträgerte Gasdiffusionsschicht mit Silber als Elektrokatalysator (schraffierte Fläche) und eine Teilfläche **22** des Trägers (Quadratsymbole) ohne Gasdiffusionsschicht aber mit erfindungsgemäßer Oberflächenbeschaffenheit des Trägers (GDE gemäß Fig. 1) auf. Hierbei ist die GDE **11** derart in die Elektrolysezelle eingebaut, dass die besagte Teilfläche **22** der GDE **11** derart in einem Bereich **24** mit einer stofflichen Durchlässigkeit zwischen Katholytspalt **12** und Gasraum **4** in der Elektrolysezelle orientiert, dass im Betrieb bei Übertritt von Katholyt aus dem Katholytspalt **12** in den Katholytablauf **14** mindestens ein Areal der Teilfläche **22** des offenporigen Trägers mit Katholyt in Kontakt treten kann, bevor er aus dem Abfluss **17** herausgebracht wird. Als Katholytablauf **14** gilt der Raum zur Ableitung von Katholyt aus dem Katholytspalt **12** bis zur Herausführung über den Abfluss **17.**

Die Elektrolysezelle der Fig. 2 weist ferner einen Anolytzulauf **8** und einen Anolytablauf **9** auf, durch die der Anodenraum **15** und die darin befindliche Anode **10** mit einem Anolytstrom versorgt werden. Zudem enthält die Elektrolysezelle zur Versorgung mit Strom eine Stromleitung für die Kathode **19** und eine Stromleitung für die Anode **20.** Die Kathode wird über eine Steife, elektrisch leitfähige Struktur **23** mit Durchbrüchen für Gas und Elektrolyt mit Strom versorgt, welche an der GDE **11** aufliegt.

Anodenhalbschale **2** und Kathodenhalbschale **1** werden über die Flanschbereiche **25a** und **25b** kontaktiert und mit jeweils einer Dichtung **26** abgedichtet. Zumindest der Separator **3** wird über die besagten Flanschbereiche zwischen den Halbschalen fixiert.

### Beispiele:

### Beispiel 1:

In einer Halbzelle der Fa. Gaskatel, (FlexCell) wurden verschiedene Werkstoffe gegenüber der RHE (HydroFex) vermessen. Als Elektrolyt wurde Natronlauge mit einer Konzentration von 32 Gew.% eingestzt. Die Temperatur bei der Messung wurde auf 50°C eingestellt.

Das sich einstellende Potenzial wurde stromlos gemessen.

| Werkstoff | Potential [mV vs RHE] |
|---|---|
| Nickel | 1120 |
| Silber | 1136 |
| Vergoldetes Ni | 1143 |

Hierbei zeigte sich, das Nickel das niedrigste Potential zur Wasserstoffentwicklung aufzeigt.

### Beispiel 2:

In einer Laborzelle ausgerüstet mit einer SVK von einer Fläche von 100cm² (Elektrokatalysator: Silber, Gasdiffusionsschicht: PTFE) wurden an einem Randbereich 6cm² als Teilfläche ohne Gasdiffusionsschicht, d.h. nur mit Träger, ausgerüstet, so dass hier der Träger in der Laborzelle mit dem Elektrolyt in Kontakt stand. Der Werkstoff des Trägers war Nickel. Bei einer Stromdichte von 6 kA/m² betrug die H₂ Konzentration im O₂ 1480 ppm.

In gleicher Anordnung wurde eine SVK von einer Fläche von 100cm² (Elektrokatalysator: Silber, Gasdiffusionsschicht: PTFE) mit einem Träger aus Silber eingesetzt, wobei 6cm² als Teilfläche ohne Gasdiffusionsschicht nur mit Träger ausgerüstet war, so dass hier der Träger in der Laborzelle mit dem Elektrolyt in Kontakt stand. Dieser Träger wies an der Oberfläche der Teilfläche Silber als Material auf. Bei einer Stromdichte von 6 kA/m² betrug der Konzentration von H₂ in O₂ bei 6,5 kA/m² nur 280ppm. Somit kann die Zelle bei höherer Stromdichte mit niedrigerem H₂ Gehalt betrieben werden.

## Patentansprüche

1. Gasdiffusionselektrode, enthaltend mindestens einen Elektrokatalysator und mindestens eine, auf mehr als 75% der Fläche eines offenporigen, flächigen, aus mindestens einem Werkstoff gefertigten Trägers angeordnete Gasdiffusionsschicht (21), **dadurch gekennzeichnet, dass** bezogen auf das Gesamtgewicht des besagten Trägers der Gesamtanteil an elektrisch leitendem Werkstoff des besagten Trägers im Mengenbereich von 50 bis 100 Gew.-%, insbesondere von 70 bis 100 Gew.-%, liegt und der besagte Träger zumindest entlang eines seiner Randbereiche eine Teilfläche (22) aufweist, die nicht mit der Gasdiffusionsschicht bedeckt ist, wobei an besagter Teilfläche (22) zumindest an der Oberfläche des besagten Trägers ein Material vorliegt, das (a) elektrischen Strom leitet und bei 50°C mindestens die gleiche Überspannung für die Wasserstoffentwicklung aufweist als der mindestens eine Elektrokatalysator oder (b) ein Isolator ist.

2. Gasdiffusionselektrode gemäß Anspruch 1, **dadurch gekennzeichnet, dass** der besagte offenporige, flächige Träger als Gitter, Netz, Vlies, Schaum, Gewebe, Geflecht, Lochblech oder Streckmetall vorliegt.

3. Gasdiffusionselektrode gemäß Anspruch 1 oder Anspruch 2, **dadurch gekennzeichnet, dass** besagter mindestens eine Werkstoff des Trägers ein metallischer Werkstoff ist, der mindestens 99 Gew.-% mindestens eines Metalls ausgewählt aus Nickel, Silber, Nickellegierung oder Mischungen daraus, enthält.

4. Gasdiffusionselektrode gemäß einem der Ansprüche 1 bis 3, **dadurch gekennzeichnet, dass** das besagte Material ausgewählt wird aus dem mindestens einen Elektrokatalysator, bevorzugt ausgewählt wird aus Silber, Silberoxid und Mischungen daraus.

5. Gasdiffusionselektrode gemäß einem der Ansprüche 1 bis 4, **dadurch gekennzeichnet, dass** der Isolator bei 25°C eine Leitfähigkeit von weniger als 10⁻⁸ S/cm aufweist.

6. Gasdiffusionselektrode gemäß einem der Ansprüche 1 bis 5, **dadurch gekennzeichnet, dass** der Isolator ausgewählt wird aus mindestens einem kohlenstoffhaltigen Polymer.

7. Gasdiffusionselektrode gemäß einem der Ansprüche 1 bis 6, **dadurch gekennzeichnet, dass** der Isolator ausgewählt wird aus mindestens einem Polymer, ausgewählt aus Polyethylen, Polypropylen, Polymere fluorierter Olefine (wie Polytetrafluoroethylen, Polyvinylfluoride, Polyvinylidenfluorid), Polyamid-6, Polyamid-6,6, Polyamid-11, Polyamid-12, Polyethylen-Copolymer, Polypropylen-Copolymer, Copolymere aus fluorierten Olefinen, Polyamid-Copolymer.

8. Gasdiffusionselektrode gemäß einem der Ansprüche 1 bis 7, **dadurch gekennzeichnet, dass** das besagte Material aus solchen Materialien ausgewählt wird, die bei 25°C eine elektrische Leitfähigkeit von 0 bis 10000 S/cm, bevorzugt von 0 bis 5000 S/cm, besonders bevorzugt von 0 bis 1000 S/cm, aufweisen.

9. Gasdiffusionselektrode gemäß einem der Ansprüche 1 bis 8, **dadurch gekennzeichnet, dass** der besagte elektrisch leitende Werkstoff bei 25°C eine elektrische Leitfähigkeit von mehr als 10000 S/cm, bevorzugt von mindestens 1 MS/cm (Megasiemens/cm), bevorzugt von mindestens 5 MS/cm, aufweist.

10. Gasdiffusionselektrode gemäß einem der Ansprüche 1 bis 9, **dadurch gekennzeichnet, dass** die Gasdiffusionsschicht mindestens ein hydrophobes Polymer, insbesondere mindestens ein perfluoriertes Polymer, besonders bevorzugt PTFE, enthält.

11. Gasdiffusionselektrode gemäß einem der Ansprüche 1 bis 10, **dadurch gekennzeichnet, dass** der Elektrokatalysator mindestens einen Silber-haltigen Stoff, ausgewählt aus Silber, Silberoxid und Mischungen daraus, enthält.

12. Gasdiffusionselektrode gemäß einem der Ansprüche 1 bis 11, **dadurch gekennzeichnet, dass** an besagter Teilfläche (22) des Trägers eine Oberflächenbeschichtung des besagten elektrisch leitenden Werkstoffs mit besagtem Material vorliegt.

13. Elektrolysezelle, enthaltend
(i) eine Anodenhalbschale (2) mit einem Anodenraum (15);
(ii) eine aus elektrisch leitfähigem Werkstoff gefertigte Kathodenhalbschale (1) mit einem Kathodenraum (16), enthaltend mindestens einen Katholytraum, der mindestens einen Katholytzulauf (13), mindestens einen Katholytspalt (12), mindestens einen Katholytablauf (14) und mindestens einen Abfluss (17) enthält;
(iii) mindestens einen Separator (3) zur Abgrenzung des Anodenraums (15) der Anodenhalbschale (2) vom Kathodenraum (16) der Kathodenhalbschale (1);
(iv) eine Gasdiffusionselektrode (11) gemäß einem der Ansprüche 1 bis 12, wobei die Gasdiffusionselektrode (11) mit ihrer größten Fläche auf Abstand entlang der Separatorfläche unter Bildung eines Katholytspaltes (12) orientiert ist und den Kathodenraum (16) in einen Gasraum (4) und den Katholytraum unterteilt und wobei die Teilfläche (22) des offenporigen Trägers der Gasdiffusionselektrode, die nicht mit der Gasdiffusionsschicht bedeckt ist, den Katholytspalt (12) von dem Katholytablauf (14) abgrenzt;
wobei zwischen Katholytspalt (12) und Gasraum (4) mindestens ein Bereich (24) mit einer stofflichen Durchlässigkeit vorhanden ist, der einen Übertritt von Katholyt aus dem Katholytspalt (12) in den Katholytablauf (14) ermöglicht, wobei mindestens ein Areal der Teilfläche (22) des offenporigen Trägers der Gasdiffusionselektrode derart im Bereich (24) mit stofflicher Durchlässigkeit positioniert ist, dass es mit Katholyt in Kontakt treten kann.

14. Elektrolysezelle gemäß Anspruch 13, **dadurch gekennzeichnet, dass** besagter elektrisch leitfähige Werkstoff ein metallischer Werkstoff, insbesondere ein Metall oder eine Metalllegierung, ist.

15. Elektrolysezelle gemäß Anspruch 13 oder Anspruch 14, **dadurch gekennzeichnet, dass** besagter elektrisch leitfähige Werkstoff eine bei 25°C eine elektrische Leitfähigkeit von mehr als 10000 S/cm, bevorzugt von mindestens 1 MS/cm (Megasiemens/cm), bevorzugt von mindestens 5 MS/cm, aufweist.

16. Elektrolysezelle gemäß einem der Ansprüche 13 bis 15, **dadurch gekennzeichnet, dass** besagter elektrisch leitfähige Werkstoff ein metallischer Werkstoff ist, der mindestens 99 Gew.-% mindestens eines Metalls ausgewählt aus Nickel, Silber, Nickellegierung oder Mischungen daraus, enthält.

17. Verfahren zur elektrochemischen Umwandlung gasförmiger Verbindungen, **dadurch gekennzeichnet, dass** in einer Elektrolysezelle nach einem der Ansprüche 13 bis 17 eine gasförmige Verbindung durch eine erste Gaszuleitung (5) in den Gasraum (4) der Kathodenhalbschale (1) eingebracht wird, mit der Gasdiffusionselektrode (11) kontaktiert wird und durch das Anliegen einer elektrischen Spannung elektrochemisch umgesetzt wird.

18. Verfahren gemäß Anspruch 17, **dadurch gekennzeichnet, dass** Katholyt durch den Katholytzulauf (13) in die Elektrolysezelle eingebracht wird, durch den Katholytspalt (12) hindurchgeführt wird, durch den Bereich (24) mit stofflicher Durchlässigkeit in den Katholytablauf (14) überführt und mit einem Areal der Teilfläche (22) des offenporigen Trägers der Gasdiffusionselektrode kontaktiert wird und aus dem Abfluss (18) wieder herausgeführt wird.
